(19) Europäisches Patentamt
European Patent Office
Office européen des brevets

(11) EP 2 203 505 B1

(12) EUROPEAN PATENT SPECIFICATION

(45) Date of publication and mention of the grant of the patent:
**29.02.2012 Bulletin 2012/09**

(21) Application number: **08834230.8**

(22) Date of filing: **18.09.2008**

(51) Int Cl.:
***C08J 7/12*** $^{(2006.01)}$ ***D06M 13/17*** $^{(2006.01)}$
***D06M 13/513*** $^{(2006.01)}$ ***D06M 15/643*** $^{(2006.01)}$
***C11D 1/82*** $^{(2006.01)}$ ***C11D 3/16*** $^{(2006.01)}$
***C11D 3/37*** $^{(2006.01)}$

(86) International application number:
**PCT/US2008/010942**

(87) International publication number:
**WO 2009/042083 (02.04.2009 Gazette 2009/14)**

(54) **METHOD FOR ALTERING THE SURFACE OF A SYNTHETIC TEXTILE**

VERFAHREN ZUR VERÄNDERUNG DER OBERFLÄCHE EINER SYNTHETISCHEN TEXTILIE

PROCÉDÉ DE MODIFICATION DE LA SURFACE D'UN TEXTILE SYNTHÉTIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.09.2007 US 995213 P**

(43) Date of publication of application:
**07.07.2010 Bulletin 2010/27**

(73) Proprietor: **Momentive Performance Materials Inc.**
**New York 12211 (US)**

(72) Inventors:
- **DI PIETRO, Angela**
  **1203 Geneva (CH)**
- **MABIRE, Sandrine**
  **F-74100 Vetraz-Monthoux (FR)**
- **WAGNER, Ronald**
  **53227 Bonn (DE)**

(74) Representative: **Laufhütte, Dieter et al**
**Lorenz-Seidler-Gossel**
**Widenmayerstrasse 23**
**80538 München (DE)**

(56) References cited:
**DE-A1-102005 036 602**
**US-A- 4 533 477**
**US-A1- 2006 235 181**
**US-A1- 2007 131 611**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This application claims priority to U.S. provisional application Serial No. 60/995,213, filed September 25. 2007.

## FIELD OF THE INVENTION

The present invention relates to the alteration of synthetic fabrics by contacting the polymers with at least one silicone additive that maintains the hydrophilic characteristics of the solid synthetic textile. The silicone additive used in the method is stable to pH change and reduces the level of residual moisture content (RMC) of a fabric placed in contact with the silicone additive in a wash and/or rinse cycle of a home laundry machine. The silicone additive can be added as part of a detergent and /or a fabric conditioner.

## BACKGROUND OF THE INVENTION

Today's textile industry is continuing to change from using natural fibers such, as wools and cotton, to one that uses synthetic textiles and/or blends of synthetic textiles and natural fibers. It is well known that natural fibers, such as cotton, are normally hydrophilic and maintain a certain level of hydrophilicity after being washed, a characteristic not necessarily shared with synthetic fibers. That is, synthetic fibers, unlike natural fibers, are mostly hydrophobic or quickly become hydrophobic after one or two washes. This is undesirable since hydrophobic textiles do not absorb water and tend to build up static charge when dried in a laundry dryer. In addition, many synthetic textiles do not wet easily and therefore oily stains are very difficult to remove. In fact, polyester, the most abundant synthetic fiber used in the garment industry today, is hydrophobic prior to being treated with hydrophilic additives.

A synthetic textile that is hydrophilic is favorable over a hydrophobic textile because the physical and chemical properties are much closer to those of natural fibers, like cotton. Since most synthetic fibers are naturally hydrophobic, in order to possess the positive characteristics associated with hydrophilicity, the synthetic fibers, like polyester, must be coated with compounds that make the textile hydrophilic. However, the compounds available on the market today used to treat synthetic fibers in order to make them hydrophilic usually wash out in the first or second wash. That is, the hydrophilic property disappears after the first few washes. Once the hydrophilic property is lost, the synthetic fabrics once again have higher static charge, reduced stain removal and exhibit other unfavorable characteristics normally associated with hydrophobic textiles.

Related prior art includes the US 4,533,477, which discloses a method for rendering hydrophobic synthetic textiles hydrophilic by treating the fibers with organopolysiloxanes having SiC-bonded oxyalkylene units. A particular group of polyammonium-polysiloxane copolymers are known from DE 10 2005 036 602 A1 as, inter alia, softeners in laundry detergent compositions. The US 2007/0131611 A1 discloses the utilization agents such as selected organosiloxanes and organosilanes to impart hydrophilicity to membrane-based articles such as telfon membranes.

What is needed are compounds and/or compositions that can be used to treat synthetic textiles so as to provide a more durable hydrophilic coating. What is also needed is an easy method to apply these compounds/compositions to materials so as to provide durable hydrophilicity to textiles containing at least some percentage of synthetic fibers.

The present invention provides a method using compounds and compositions to treat synthetic textiles that overcomes the shortcomings of the prior art. The method of the present invention and the composition/compounds used in the method are further described in the sections that immediately follow.

## SUMMARY OF THE INVENTION

The present invention is directed to a method for altering the solid surface of a synthetic textile with an active silicone compound or a composition containing at least one active silicone compound. The method comprises washing and/or rinsing a synthetic textile with a composition containing at least one active silicone compound so as to produce a synthetic textile having a hydrophilic surface that is not sensitive to a wide range of pH fluctuations and does not wash off in one or two washes. The active silicone compounds used in the method of the present invention is/are selected from a group consisting of a surfactant having the general formula (I):

$$(R^1)(R^2)(R^3)Si\ \text{-}R^4\ \text{-}\ Si(R^5)(R^6)(R^7)$$

where $R^1$, $R^2$, $R^3$, $R^5$, and $R^6$ are each independently selected from the group consisting of 1 to 6 monovalent hydrocarbon radicals, aryl, and a hydrocarbon group of 7 to 10 carbons containing an aryl group; $R^4$ is a hydrocarbon group of 1 to 3 carbons; $R^7$ is an alkyleneoxide group of the general formula:

$R^8(C_2H_4O)_a(C_3H_6O)_b(C_4H_8O)_cR^9$, where $R^8$ is a divalent linear or branched hydrocarbon radical having the structure:

$-CH_2-CH(R^{10})(R^{11})_dO-$, where $R^{10}$ is H or methyl; $R^{11}$ is a divalent alkyl radical of 1 to 6 carbons where the subscript d may be 0 or 1; $R^9$ is selected from the group consisting of H, monovalent hydrocarbon radicals of 1 to 6 carbon atoms and acetyl, subject to the limitation that the subscripts a, b and c are zero or positive and satisfy the following relationships: $2 \leq a + b + c \leq 20$ with $a \geq 2$;

a surfactant having the general formula (II):

MM'

where $M=R^{12}\ R^{13}\ R^{14}\ SiO_{1/2}$; $M'=R^{15}\ R^{16}\ R^{17}\ SiO_{1/2}$; with $R^{12}$ selected from the group consisting of branched monovalent hydrocarbon radical of from 3 to 6 carbon atoms and $R^{18}$, where $R^{18}$ is selected from the group consisting of $R^{19} R^{20} R^{21} SiR^{22}$ and $(R^{15} R^{16} R^{17})SiR^{22} (Si (R^{13} R^{14})SiO_{1/2})$ with $R^{19}$, $R^{20}$, and $R^{21}$ each independently selected from the group of monovalent hydrocarbon radicals having from 1 to 6 carbon atoms and monovalent aryl or alkaryl hydrocarbon radicals having from 6 to 13 carbon atoms and $R^{22}$ is a divalent hydrocarbon radical having from 1 to 3 carbon atoms, $R^{13}$ and $R^{14}$ are each independently selected from the group of from 1 to 6 carbon atom monovalent hydrocarbon radicals or $R^{12}$, with $R^{15}$ an alkylpolyalkyleneoxide of the general formula:

$$R^{23}(C_2H_4O)_e(C_3H_6O)_f(C_4H_8O)_gR^{24}$$

where $R^{23}$ is a divalent linear or branched hydrocarbon radical having the structure:

$$--CH_2--CH(R^{25})(R^{26})_hO-$$

where $R^{25}$ is H or methyl; $R^{26}$ is a divalent alkyl radical of 1 to 6 carbons where the subscript h may be 0 or 1; $R^{24}$ is selected from the group consisting of H, monovalent hydrocarbon radicals of from 1 to 6 carbon atoms and acetyl where the subscripts e, f and g are zero or positive and satisfy the following relationships: $2 \leq e + f + g \leq 20$ with $e \geq 2$, and $R^{16}$ and $R^{17}$ are each independently selected from the group of monovalent hydrocarbon radicals having from 1 to 6 carbon atoms or $R^{15}$;

a surfactant having the general formula (III):

$M^1D^1M^2$

wherein $M^1=(R^{27})(R^{28})(R^{29})SiO_{1/2}$;
$M^2=(R^{30})(R^{31})(R^{32})\ SiO_{1/2}$; and
$D^1=(R^{33})(Z)\ SiO_{2/2}$
where $R^{27}$, $R^{28}$, $R^{29}$, $R^{30}$, $R^{31}$, $R^{32}$ and $R^{33}$ are each independently selected from the group consisting of 1 to 4 carbon monovalent hydrocarbon radicals, aryl, and a hydrocarbon group of 4 to 9 carbons containing an aryl group; Z is an alkyleneoxide group of the general formula:

$$R^{34}(C_2H_4O)_i(C_3H_6O)_j(C_4H_8O)_kR^{35},$$

where $R^{34}$ is a linear or branched divalent hydrocarbon radical of 2, 3, 5, 6, 7, 8, or 9 carbon atoms; $R^{35}$ is selected from the group consisting of H, monovalent hydrocarbon radicals of from 1 to 6 carbon atoms and acetyl, and the subscripts i, j and k are zero or positive and satisfy the following relationships: $2 \leq i + j + k \leq 20$ with $i \geq 2$; and mixtures thereof;

or a polyammonium-polysiloxane copolymer surfactant comprising repeating units of the formula (IV):

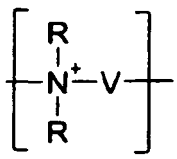

(IV)

where R represents independent from each other organic groups, which contain moieties selected from quaternary

ammonium groups or amineoxide groups,

V is selected from the group $V^1$ or group $V^2$, where

$V^2$ is selected from divalent or trivalent, straight chained, cyclic or branched, saturated, unsaturated or aromatic hydrocarbon moieties with up to 1000 carbon atoms (the carbon atoms of the below defined polysiloxane moiety $Z^2$ are not counted here) optionally containing one or more groups selected from

-O-,

$-NR^2-$,

$-N^+R^2_2-$,

where $R^2$ is hydrogen, a divalent or trivalent, straight chained, cyclic or branched, saturated, unsaturated or aromatic hydrocarbon moiety with up to 100 carbon atoms, optionally containing one or more groups selected from -O-, -NH-, - C(O)- and -C(S)-, and optionally substituted by one or more substituents, selected from the group consisting of hydroxyl, an optionally substituted , preferentially one or more N atoms containing heterocyclic group, amino, alkylamino, dialkylamino, polyether, polyetherester, under the proviso that if there are more than one -NR2- groups they can be identical or different,

-C(O)-,

-C(S)-,

optionally, the moiety $V^2$ can be substituted by one or more hydroxyl groups and the moiety $V^2$ contains at least one group $-Z^2-$ of the formula

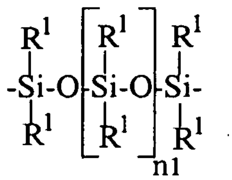

where

$R^1$ is identical or different, selected from the group consisting of: $C_1$ to $C_{22}$ alkyl, fluoro($C_1$-$C_{10}$)alkyl and $C_6$-$C_{10}$ aryl, and

with $n_1$ = 20 to 1000,

$V^1$ is selected from divalent or trivalent, straight chained, cyclic or branched, saturated, unsaturated or aromatic hydrocarbon moieties with up to 1000 carbon atoms which can be substituted by one or more groups selected from

-O-,

$-NR^2-$,

$-N^+R^2_2-$,

where $R^2$ is as defined above and the gruops $R^2$ in $V^1$ and $V^2$ can be identical or different,

-C(O)-,

-C(S)- and

$-Z^1-$, where $-Z^1-$ is a moiety of the formula

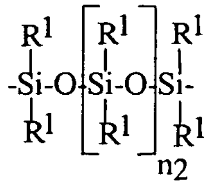

where

$R^1$ is as defined above and the groups $R^1$ in $V^1$ and $V^2$ can be identical or different, with

$n_2$ = 0 bis 19,

and optionally, the moiety $V^1$ can be substituted by one or more hydroxyl groups,
where the moieties $V^1$ and $V^2$ in the polyammonium-polysiloxane copolymers can be identical or different, under the proviso that at least one group $Z^1$ or $Z^2$ is present and
where the positive charges of the ammonium groups are neutralized by organic or inorganic acid anions.

The method of the present invention can be used with textiles comprising synthetic polymers so as to provide hydrophilic characteristics either in the wash or rinse cycle of a home laundry machine. In another embodiment of the present invention the method can be used in an industrial setting before or after the textile is made into a garment. In one embodiment of the present invention the active silicone compounds discussed above can be added to a laundry detergent composition or a fabric conditioning composition that can be applied to the textile in the wash or rinse cycle of a home laundry machine. The invention is described further in the Detailed Description section that directly follows.

## DETAILED DESCRIPTION OF THE INVENTION

As used herein, integer values of stoichiometric subscripts refer to molecular species and non-integer values of stoichiometric subscripts refer to a mixture of molecular species on a molecular eight average basis, a number average basis or a mole fraction basis.

As used herein, synthetic polymers of the present invention include polyester, acrylic, nylon and mixtures thereof. These synthetic polymers can also be blended with natural fibers such as cotton and/or wool to produce a synthetic/natural blend that can also be treated by the method of the present invention.

As used herein, textile refers to any material made of interlacing fibres including fabrics made through weaving, knitting, crocheting, or bonding and finished pieces of fabrics also referred to as cloth.

The present invention provides for a method for altering the solid surface of a synthetic textile with a composition containing at least one active silicone compound. In particular, the present invention provides a method for altering the solid surface of a textile by providing a hydrophilic surface that is resistant to degradation over a wide pH range and therefore is more durable than existing treatments currently available. As discussed above, synthetic fibers that have been treated to have, or naturally have, a hydrophilic surface often loose their hydrophilicity after one wash. The method of the present invention uses active silicone compounds or compositions that resist pH degradation, reduce the surface tension of aqueous systems, and impart rapid spreading and wetting properties, and therefore provide a hydrophilic coating that is more durable than what is available on the market today. The hydrophilic treatment of the method of the present invention can be applied during a home laundry cycle or on an industrial level.

A fabric having hydrophilic characteristics is more desirable than a hydrophobic fabric because it has retains less static charge after being tumble dried, has improved stain removal properties, has improved transpiration for all sport fabrics.

Of particular importance in the present invention is reducing static charge in garments. Static charge is the result of an area or surface having too many electrons (negative charge), or too few electrons (positive charge) and the electrons are not moving ("static"). When static electricity suddenly moves, like in a spark (i.e., electrostatic discharge), it is no longer static. Materials that are non-conductors of electricity and have good electrical insulating properties are known as dielectric materials. A dielectric will not, in practical terms, permit the flow of electricity. If there is a large enough voltage across a dielectric, the insulation will breakdown, electrons will suddenly flow and a spark results. The voltage necessary for breakdown is dependent on both the material and the thickness of the material. Almost all of the fiber polymers can be classified as dielectric materials. This is especially true for synthetic fibers, e.g. nylon, polyester,

polyolefins, acrylics etc. These materials easily become electrostatically charged when rubbed against other materials. The present invention is designed to reduce and/or alter the characteristics of the static charge by coating the fabric/ material with at least one of the silicone containing compositions described herein.

The active silicone compounds used in the method of the present invention is/are selected from a group consisting of a surfactant having the general formula (I):

$$(R^1)(R^2)(R^3)Si -R^4 - Si(R^5)(R^6)(R^7)$$

where $R^1$, $R^2$, $R^3$, $R^5$, and $R^6$ are each independently selected from the group consisting of 1 to 6 monovalent hydrocarbon radicals, aryl, and a hydrocarbon group of 7 to 10 carbons containing an aryl group; $R^4$ is a hydrocarbon group of 1 to 3 carbons; $R^7$ is an alkyleneoxide group of the general formula: $R^8(C_2H_4O)_a(C_3H_6O)_b(C_4H_8O)_cR^9$.
where $R^8$ is a divalent linear or branched hydrocarbon radical having the structure: $-CH_2-CH(R^{10})(R^{11})_dO-$, where $R^{10}$ is H or methyl; $R^{11}$ is a divalent alkyl radical of 1 to 6 carbons where the subscript d may be 0 or 1; $R^9$ is selected from the group consisting of H, monovalent hydrocarbon radicals of 1 to 6 carbon atoms and acetyl, subject to the limitation that the subscripts a, b and c are zero or positive and satisfy the following relationships: $2 \leq a + b + c \leq 20$ with $a \geq 2$;
a surfactant having the general formula (II):

$$MM'$$

where $M=R^{12} R^{13} R^{14} SiO_{1/2}$; $M'=R^{15}R^{16} R^{17} SiO_{1/2}$; with $R^{12}$ selected from the group consisting of branched monovalent hydrocarbon radical of from 3 to 6 carbon atoms and $R^{18}$, where $R^{18}$ is selected from the group consisting of $R^{19} R^{20} R^{21} R^{22}$ and $(R^{15} R^{16} R^{17})SiR^{22} (Si (R^{13} R^{14})SiO_{1/2})$ with $R^{19}$, $R^{20}$, and $R^{21}$ each independently selected from the group of monovalent hydrocarbon radicals having from 1 to 6 carbon atoms and monovalent aryl or alkaryl hydrocarbon radicals having from 6 to 13 carbon atoms and $R^{22}$ is a divalent hydrocarbon radical having from 1 to 3 carbon atoms, $R^{13}$ and $R^{14}$ are each independently selected from the group of from 1 to 6 carbon atom monovalent hydrocarbon radicals or $R^{12}$, with $R^{15}$ an alkylpolyalkyleneoxide of the general formula:

$$R^{23}(C_2H_4O)_e(C_3H_6O)_f(C_4H_8O)_gR^{24},$$

where $R^{23}$ is a divalent linear or branched hydrocarbon radical having the structure:

$$--CH_2--CH(R^{25})(R^{26})_hO-$$

where $R^{25}$ is H or methyl; $R^{26}$ is a divalent alkyl radical of 1 to 6 carbons where the subscript h may be 0 or 1; $R^{24}$ is selected from the group consisting of H, monovalent hydrocarbon radicals of from 1 to 6 carbon atoms and acetyl where the subscripts e, f and g are are zero or positive and satisfy the following relationships: $2 \leq e + f + g \leq 20$ with $e \geq 2$, and $R^{16}$ and $R^{17}$ are each independently selected from the group of monovalent hydrocarbon radicals having from 1 to 6 carbon atoms or $R^{15}$;
a surfactant having the general formula (III):

$$M^1D^1M^2$$

wherein $M^1=(R^{27})(R^{28})(R^{29})SiO_{1/2}$;
$M^2=(R^{30})(R^{31})(R^{32}) SiO_{1/2}$; and
$D^1=(R^{33})(Z) SiO_{2/2}$
where $R^{27}$, $R^{28}$, $R^{29}$, $R^{30}$, $R^{31}$, $R^{32}$ and $R^{33}$ are each independently selected from the group consisting of 1 to 4 carbon monovalent hydrocarbon radicals, aryl, and a hydrocarbon group of 4 to 9 carbons containing an aryl group; Z is an alkyleneoxide group of the general formula:
$R^{34}(C_2H_4O)_i(C_3H_6O)_j(C_4H_8O)_kR^{35}$, where $R^{34}$ is a linear or branched divalent hydrocarbon radical of 2, 3, 5, 6, 7, 8, or 9 carbon atoms; $R^{35}$ is selected from the group consisting of H, monovalent hydrocarbon radicals of from 1 to 6 carbon atoms and acetyl, and the subscripts i, j and k are zero or positive and satisfy the following relationships: $2 \leq i + j + k \leq 20$ with $i \geq 2$ and mixtures thereof.

Additionally, the active silicone compounds may include a polyammonium-polysiloxane copolymer surfactant comprising repeating units of the formula (IV):

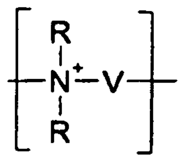

**(IV)**

where R represents independent from each other organic groups, which contain moieties selected from quaternary ammonium groups or amineoxide groups,
V is selected from the group $V^1$ or group $V^2$,
where
$V^2$ is selected from divalent or trivalent, straight chained, cyclic or branched, saturated, unsaturated or aromatic hydrocarbon moieties with up to 1000 carbon atoms (the carbon atoms of the below defined polysiloxane moiety $Z^2$ are not counted here) optionally containing one or more groups selected from

-O-,

$-NR^2-$,

$-N^+R^2{}_2-$,

where $R^2$ is hydrogen, a divalent or trivalent, straight chained, cyclic or branched, saturated, unsaturated or aromatic hydrocarbon moiety with up to 100 carbon atoms, optionally containing one or more groups selected from -O-, -NH-, -C(O)- and -C(S)-, and optionally substituted by one or more substituents, selected from the group consisting of hydroxyl, an optionally substituted , preferentially one or more N atoms containing heterocyclic group, amino, alkylamino, dialkylamino, polyether, polyetherester, under the proviso that if there are more than one -NR2- groups they can be identical or different,

-C(O)-,

-C(S)-,

optionally, the moiety $V^2$ can be substituted by one or more hydroxyl groups and the moiety $V^2$ contains at least one group $-Z^2-$ of the formula

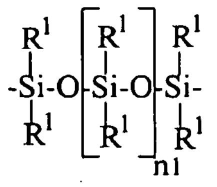

where
$R^1$ is identical or different, selected from the group consisting of: $C_1$ to $C_{22}$ alkyl, fluoro($C_1$-$C_{10}$)alkyl and $C_6$-$C_{10}$ aryl, and with $n_1$ = 20 to 1000,
$V^1$ is selected from divalent or trivalent, straight chained, cyclic or branched, saturated, unsaturated or aromatic hydrocarbon moieties with up to 1000 carbon atoms which can be substituted by one or more groups selected from

-O-,

$-NR^2-$,

$-N^+R2^2-$,

where $R^2$ is as defined above and the groups $R^2$ in $V^1$ and $V^2$ can be identical or different,

-C(O)-,

-C(S)-

and

$-Z^1-$,

where $-Z^1-$ is a moiety of the formula

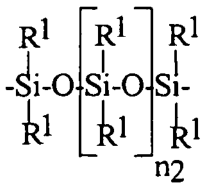

where
$R^1$ is as defined above and the groups $R^1$ in $V^1$ and $V^2$ can be identical or different, with
$n_2$ = 0 bis 19,
and optionally, the moiety $V^1$ can be substituted by one or more hydroxyl groups,
where the moieties $V^1$ and $V^2$ in the polyammonium-polysiloxane copolymers can be identical or different, under the proviso that at least one group $Z^1$ or $Z^2$ is present and
where the positive charges of the ammonium groups are neutralized by organic or inorganic acid anions.

Other silicone containing surfactants that resist degradation over a wide pH range, namely a pH of about 2 to about 12, that provides hydrophilic properties to a fabric when exposed thereto are also envisioned to be used as part of the method of the present invention.

The silicone compounds described in Formula (I) above are fully described in a co-pending application having the United States Serial No. 11/379592, which was filed on April 21, 2006 and is entitled, Hydrolysis Resistant Organo-Modified Silylated Surfactants. Similarly, the silicone compounds described in Formula (II) above are fully described in a co-pending application having the U.S. Publication Number: US 2007/0088091, which was filed on December 13, 2005 and is entitled, Hydrolysis Resistant Organo-Modified Disiloxane Surfactants. Finally, the silicone compounds described in Formula (III) above are fully described in a co-pending application having the U.S. Publication Number: US 2007/0184005, which was filed on February 9, 2006 and is entitled, Hydrolysis Resistant Organo-Modified Trisiloxane Surfactants.

The production of the above-referenced silicone compounds used in the method of the present invention to provide a durable hydrophilic fabric upon washing the fabric with at least one of these compounds can be produced according the materials and methods described in the respective patent applications listed above. The information provided in these patent applications as well as the present application would allow one skilled in the art to produce the silicone compounds used in the method of the present invention and therefore enables the full scope of the claimed invention.

The durability of the hydrophilic coating of the fabrics produced from the method of the present invention unexpectedly remains hydrophilic for many more wash and dry cycles than synthetic fabrics treated with other methods to provide hydrophilicity. The effectiveness and unexpected durability of the hydrophilic characteristics of fabrics produced using the method of the present invention is shown in the examples and further discussed below.

## TESTING PROCEDURE FOR THE EFFECTIVENESS OF APPLICATION OF THE INSTANT PROCESS ON FABRICS

To determine whether the effectiveness of process of the instant invention, the following non-limiting examples have been carried out. Two 100% polyester T-shirts were used in the examples as "fabric monitors" (or control) and were included into washing machine together with cotton T-shirts and cotton terry towels, as ballast. The entire wash load was washed with detergent and with or without fabric softener at the rinse cycle to which the silicone additive has been added. At the end of wash cycle, polyester T-shirts were dried in a tumble drier.

The method used to measure the effectiveness of the instant invention in the examples was drop test. Drop Test is designed to measure the time absorbency (sec.) of 20 microliters of distilled water through polyester textiles.

In order to test the durability of the hydrophilic characteristics of a fabric produced using the method of the present invention, a durable hydrophilicity test was conducted. In this test, hydrophilic polyester fabric was washed four

times with laundry detergent and then rinsed with water until the polyester becomes hydrophobic. The polyester load was dried after each wash cycle and the drop test was carried out in order to check the hydrophilicity/hydrophobicity. The greater the number of wash/dry cycles necessary to reach 100% hydrophobicity indicates the greater durability of the hydrophilic coating provided to the fabric using the method of the present invention.

In order to test the amount of static charge and the duration in which the static charge is retained on a fabric subjected to the method of the present invention a static test was conducted. The test is designed not only to measure the quantity of the static charge on a fabric after it is subjected to the method of the present invention but also to determine the influence of duration of the retained charge of the treated fabric.

## EXAMPLES

Examples 1 -4 and comparative Examples A and B are described below and the results provided in tables and graphs that immediately follow thereafter.

For each of the examples 2.7 Kg of wash load including 4 (40x60 cm) 100% cotton terry Towels, 2 (240 x 310 cm, 270 x 310 cm) 100% cotton sheets, 2- 100% polyester T-shirts were placed in a Indesit W63T, front load washing machine. The loads were then washed on a 40 degree Celsius cotton cycle using 50 grams of detergent (Persil Color-trade name) and were spun at 600rpm.

Example A was carried out as described above and no fabric softener and no silicone additives were added to the rinse cycle in the washer.

Example B was carried out as described above, and fabric softener was added to rinse cycle in the washer with no silicone additive.

Example 1 was carried out as described Example A, except a silicone additive of general formula (II) above was added to the rinse cycle in the washer.

Example 2 was carried out as described Example B except a silicone additive of general formula (III) was added to the fabric softener in the rinse cycle in the washer.

Example 3 was carried out as Example A except a quaternary aminosilicone polyether copolymer of general formula (IV) was added to the rinse cycle in the washer.

Example 4 was carried out as Example A except a second quaternary aminosilicone polyether copolymer of general formula (IV) was added to the rinse cycle in the washer.

The Hydrophilicity/Hydrophobicity Results using Drop Test of the Examples are as follows:

**Drop test results on polyester T-Shirts:**

| | EXAMPLE A | EXAMPLE B | EXAMPLE 1 | EXAMPLE 2 | EXAMPLE 3 | EXAMPLE 4 |
|---|---|---|---|---|---|---|
| Drop Time, sec. | >120 | >120 | 0 | 0 | 0 | 0 |

Drop Test results of the examples A and B show that polyester T-shirts washed with detergent (Example A) and with fabric softener at the rinse cycle (Example B) are hydrophobic, whereas the addition of the silicone additives of the present invention as rinse additives (Examples 1, 3 and 4) or with fabric softener (Example 2) make the polyester textiles hydrophilic.

Durability Test:

To measure the durable hydrophilicity of the polyester t-shirts, the shirts were placed in the Indesit W 63T, front load washing machine and washed at 40 degrees Celsius on the cotton cycle using 50 grams of Persil Color® detergent. The load was spun at 600 rpm for 4 times. The loads were then washed only with water until the polyester became hydrophobic. The loads were dried after each wash cycle and the drop test was carried out on the polyester t-shirts. Hydrophobicity at this stage was calculated using the following equation:

$$\text{Hydrophobicity Index} = 100 \times \; t_1 / t_0$$

where

$t_1$ = drop time of polyester t-shirt measured after each wash and dry cycle.

$t_0$ = drop time of polyester t-shirt pre-treated.

| | EXAMPLE A | EXAMPLE B | EXAMPLE 1 | EXAMPLE 2 | EXAMPLE 3 | EXAMPLE 4 |
|---|---|---|---|---|---|---|
| # of wash and dry cycles to become hydrophobic | ------- | ------- | 15 | 11 | 14 | 16 |

**Hydrophilicity Polyester Fabrics Durability Test**

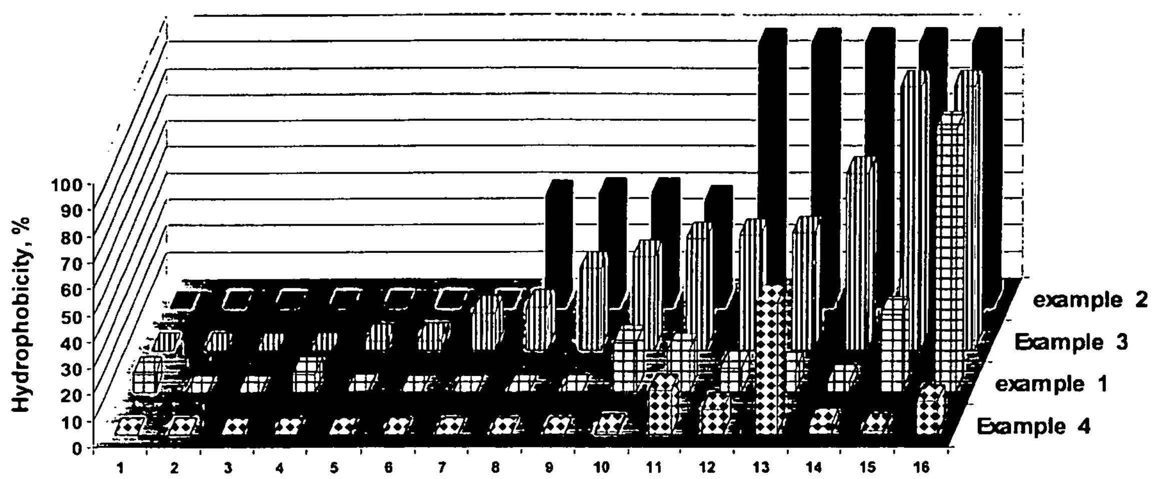


As shown in the three-dimensional graph entitled *Hvdrophilicity Polyester Fabrics Durability Test* set forth above, Example 4 never reached 100% hydrophilicity even after 16 repeated wash and dry cycles. Thus, the durability of the hydrophilic characteristics of fabrics washed with at least one of the above-described silicone compounds is evident from the sheer number wash and dry cycles that have to be completed in order to either reach 100% hydrophobicity. In the case of Example 3, 100% hydrophobicity was never reached, as shown in the Durability graph above, but for purposes of this test it is listed in the table above as reaching 100% hydrophobicity in greater than 16 loads.

Examples 5 and comparative Examples C and D are designed to measure the amount of / retention of static charge on a fabric subjected to the method of the present invention. The way to assess the charge retention performance of materials is to measure the "charge decay time": how quickly any charge put on the materials dissipates over and through the material and away to earth [1]. The simplest way to test the charge retention capability of materials is to put some charge on the material and see how quickly this charge disappears.

JCI 155v5 Charge Decay Test Unit is an instrument, which uses a high voltage corona discharge to deposit a patch of charge on the surface of material to be tested. A fast response electrostatic field meter observes the voltage generated by this charge on the material and measurement is made of how quickly this voltage falls as the charge migrates away. Corona charge deposition is a simple way to simulate practical charging events. It allows control of initial surface voltage and charge polarity and is applicable for all types of surfaces, whether uniform or with localized conducting features. Studies have shown that corona charge decay matches well the practical situation of the decay of charge generated by rubbing surfaces together and provides consistent, reproducible results that are not affected by corona exposure.

The following examples describe the charge decay time measurements on polyester and on elastane/polyamide fabrics treated with and without silicones, after washing, to assess the charge retention capability. Normally, elastane/polyamide fabrics are extremely hydrophobic, whereas polyester is hydrophilic because it has a pre-treatment during the textile process. The compositions of the present invention used to treat the synthetic fabrics have been chosen since they make polyester fabrics hydrophilic.

Chart 1 below provides the products used in the method of the present invention and the percentage dosed.

These products have been added during the washing cycle and the quantity dosed is the minimum one to make the polyester hydrophilic. The only exception is for Sample E, which has been added during the softener cycle (without and with softener) to make polyester hydrophilic. Adding it during the washing cycle does not work, even increasing the dosage.

**Chart 1**

| Product | Quantity dosed into the washing cycle, % |
|---|---|
| Sample A | 1 |
| Sample B | 3 |
| Sample C | 1 |
| Sample D | 3 |
| Sample E | 3.5 |
| Sample F | 4.5 |

Sample A is a silicone additive of general formula (I) above.
Sample B is a second silicone additive of general formula (I) above.
Sample C is a silicone additive of general formula (II) above.
Sample D is a second silicone additive of general formula (II) above.
Sample E is a silicone additive of general formula (IV) above.
Sample F is a silicone additive of general formula (IV) above.

The wash load type, wash conditions and physical/chemical measurements are described below.

The following wash load type has been used for testing: Five 100% polyester T-shirts, one Nylon/Elastane underwear and ballast.

Silicone products have been added during the wash cycle together with detergent (except for Sample E, as stated above) and during the softener cycle together with fabric conditioner. All the wash loads have been pre-washed following the ASTM Method for Fabric Pre-treatment. The entire wash load was treated as follows:

1. Washed four times adding 50 g of anionic detergent (i.e. Persil color Powder), T=40°C, spin = 600 rpm;
2. Washed three times with no detergent, at a temperature of 40°C, and a spin cycle at about 600 rpm; and
3. Dried fabrics.

The wash conditions with and without softener used in the present examples are as follows:

Washing Machine Used: MIELE NOVOTRONIC
Wash load Type: 5 T-shirts 100% polyester, 1 Nylon/Elastane and ballast
Detergent Dosage: 25 g anionic detergent (i. e. Persil Color as manufacturer's recommended);
Temperature: 40°C, Spin = 600rpm
Fabric Softener dosage: 20 ml Comfort (as manufacturer's recommended)
Silicone Product Dosage: the minimum level to make polyester hydrophilic. The silicones were added in the washing cycle without softener. Whereas, when softener was added, the silicones were added together with the softener. The only exception was for Sample E, which was added, in both cases, at the softener cycle. The fabrics were washed five times to measure the build-up. Samples were taken after one, three and five washes, while for nylon/elastane fabric samples were taken only after five washes. After each wash the wash load was tumble-dried and all the samples were stored paper positioned between each sample to avoid the transfer of static charge from one sample to another by direct contact.

Physical and chemical Measurements were conducted on each of the samples, namely static charge measurements and build-up studies.

I. **Static Charge Measurements**

As described above, static charge retention was measured by placing some charge on the material and measuring decay over time using a JCI 155v5 Charge Decay Test Unit. This decay test unit uses high voltage corona discharge to deposit a patch of charge on the surface of material to be tested and using a fast response electrostatic field meter observes the voltage generated by this charge on the material. The measurement is made based on how quickly this

voltage falls as the charge migrates away. The JCI 155 test unit has a 45 X 54 mm test aperture in the instrument base plate, which can rest directly on the test surface. Contact with the surface around the test aperture provides a return route for outwardly migrating charge and high local capacitance to trap such a charge. Instrument software provides for automatic zero setting of the field meter just before each test.

The JCI, 155 test unit measures the decay time in relation to the initial peak voltage and calculates two points (simple acceptance test criterion): voltage to 37% and 10% of the initial peak voltage. These two points are measured so as to have a quick comparison between materials. Charge decay characteristics are usually susceptible to absorption of surface moisture from the atmosphere, so measurements are very likely to depend on humidity. JCI 155v5 includes components designed to measure both temperature and humidity within the test region of the instrument. For this reason the fabrics have been stored in a closed carton box and the measurements have been made controlling the temperature and humidity in the laboratory. Results from the following test are reported in the graphs that directly following the build-up test.

**Build-up**

Each fabric was washed five times and the fabrics were sampled at one, three and five washes. Several chemical/physical properties of the fabrics were sampled for build-up of the product.

Three decay time measurements were obtained in testing the material under a set of test conditions. These measurements have been made at different positions on the fabrics. Several tests have been made with positive and negative corona polarity, to assure that any differences noted were not due to polarity. In addition, to the above data the following information was also recorded:

a) Temperature and Relative humidity
b) Test conditions of corona charging, duration, polarity
c) Individual values of initial peak sample surface voltage and the time from peak voltage to 37% and 10% of this voltage
d) Received Charge
e) Capacitance loading: the quantity of charge per unit of initial peak surface voltage. The influence of electrostatic charge on materials depends both on how long it is there and to the associated surface voltage created.

**Laundry Powder Detergent without Softener**

The first series of results regards all the polyester T-shirts and nylon/elastane underwear washed with laundry powder detergent (Persil Color) + silicone products without softener (Comfort).

Two controls have been considered: CONTROL 1 shows the charge decay behavior obtained for the Polyester T-shirt and Nylon/Elastane underwear pre-treated and CONTROL 2 shows the charge decay behavior obtained for the Polyester T-shirt and Nylon/Elastane underwear washed with Persil Color.

| Polyester, CONTROL 1 (only pre-treatment WL1) | Nylon/Elastane, CONTROL 1 (only pre-treatment WL1) |
|---|---|
| Surface (Temp. °C): 23.6 | Surface (Temp. °C): 24.9 |
| Surface (% R.H.): 16.96 | Surface (% R.H.): 14.9 |
| 1/e not reached | 1/e reached after 392.52 sec |
| 10% not reached | 10% not reached |
| Received charge = 7.27479 nC | Received charge = 14.7222 nC |
| Capacitance loading = 1.87024 | Capacitance loading = 3.44929 |

Although both fabrics are hydrophobic, Nylon/Elastane dissipates static charge, while polyester tends not to dissipate the static at all. That is, more than 37% of the initial charge still remains after 900 seconds in the polyester fabrics tested while, nylon/elastane reaches 37% of initial voltage at 392 seconds. It is still too long as time, however the tendency to dissipate charge is higher.

| Polyester, CONTROL 2, 1W | Polyester CONTROL 2, 3W | Polyester CONTROL 2, 5W | Nylon/Elastane, CONTROL 2 |
|---|---|---|---|
| Surface (Temp. °C): 25.6 | Surface (Temp. °C): 26 | Surface (Temp. °C): 26 | Surface (Temp. °C): 26 |
| Surface (% R.H.): 14.17 | Surface (% R.H.): 13.61 | Surface (% R.H.): 14.21 | Surface (% R.H.): 14.54 |
| 1/e not reached | 1/e not reached | 1/e not reached | 1/e reached after 22.837 sec |
| 10% not reached | 10% not reached | 10% not reached | 10% reached after 100.65 sec |
| Received charge = 12.0402 nC | Received charge = 6.49795 nC | Received charge = 8.07609 nC | Received charge = 6.19862 nC |
| Capacitance loading = 3.29363 | Capacitance loading = 1.70448 | Capacitance loading = 2.13712 | Capacitance loading = 1.61422 |

As indicated by the results shown above, even if the polyester shirt is washed with detergent and starts to become hydrophilic, it is still not sufficient enough to dissipate the static charge. Conversely, the nylon/elastane fabric remains hydrophobic, however the charge dissipates quickly: 37% of initial charge is dissipated reached after about 23 sec. and 10% after about 100 sec.

The next set of data show the comparison between the controls and the fabrics treated with silicones.

The first results regard the following wash loads:

a) CONTROL 2: Polyester T-shirt and Nylon/Elastane underwear washed with Persil Color

b) Detergent+ Sample A: Polyester T-shirt and Nylon/Elastane underwear washed with Persil Color + Sample A

c) Detergent + Sample B: Polyester T-shirt and Nylon/Elastane underwear washed with Persil Color + Sample B

Charge decay data for polyester and nylon/elastane washed with Samples A and Sample B after one, three and five washes (1W, 3W, 5W)

| Detergent+Sample A | Polyester, 1W | Polyester 3W | Polyester, 5W | Nylon/Elastane |
|---|---|---|---|---|
| Surface (Temp. °C) | 23.58 | 24.4 | 25.13 | 25.2 |
| Surface (% R.H.) | 18.9 | 17.87 | 17.65 | 18.1 |
| 1/e reached after | 933.03 sec | 699.03 sec | 563.03 sec | 17.837 sec |
| 10% | not reached | not reached | not reached | not reached |
| Received charge | 12.1905 nC | 15.7976 nC | 8.29758 nC | 6.12406 nC |
| Capacitance loading | 3.36031 | 4.20087 | 2.26227 | 1.52173 |

| Detergent+Sample B | Polyester, 1W | Polyester 3W | Polyester, 5W | Nylon/Elastane |
|---|---|---|---|---|
| Surface (Temp. °C) | 25.55 | 25.6 | 26 | 26 |
| Surface (% R.H.) | 18.47 | 18.21 | 18.34 | 18.45 |
| 1/e reached after | 741.03 sec | 280.52 sec | 87.15 sec | 6.6969 sec |
| 10% reached after | not reached | not reached | 345.52 sec | 41.525 sec |
| Received charge | 12.8349 nC | 13.2109 nC | 10.5362 nC | 9.22788 nC |
| Capacitance loading | 3.4081 | 3.49092 | 2.84718 | 2.43159 |

The tables above report the charge decay measurements. Inclusion of Sample A in the wash load causes an

increase in the rate of static charge dissipation on polyester compared to the control without silicone additive. Inclusion of Sample B in the wash load causes an increase in the rate of static charge dissipation on polyester and nylonlelastane compared to the control without silicone additive. The data also indicate that there is a build-up effect of static charge dissipation, as the samples washed five times show faster rates of dissipation than those washed only one or three times.

The following example shows the benefit of inclusion of Sample D in the wash load:

d) CONTROL 2: Polyester T-shirt and Nylon/Elastane underwear washed with Persil Color

e) Detergent+ Sample D: Polyester T-shirt and Nylon/Elastane underwear washed with Persil Color detergent and Sample D

Charge decay data for polyester and nylon/elastane washed with Sample D after one, three and five washes (1W, 3W, 5W)

| Pers.Color+Sample D | Polyester, 1W | Polyester 3W | Polyester, 5W | Nylon/Elastane |
|---|---|---|---|---|
| Surface (Temp. °C) | 25.51 | 24 | 24.8 | 25.18 |
| Surface (% R.H.) | 18.2 | 21.1 | 19.87 | 18.48 |
| 1/e reached after | 158.77 sec | 170.77 sec | 122.4 sec | 28.212 sec |
| 10% | not reached | 625.03 sec | 442.52 sec | 137.77 sec |
| Received charge | 8.62541 nC | 9.05355 nC | 8.85408 nC | 11.9414 nC |
| Capacitance loading | 2.36338 | 2.50315 | 2.414 | 2.10554 |

The table above reports the charge decay measurements. Inclusion of Sample D in the wash load causes an increase in the rate of static charge dissipation on polyester compared to the control without silicone additive. The data also indicate that there is a build-up effect of static charge dissipation, as the samples washed five times show faster rates of dissipation than those washed only one or three times.

**Laundry Powder Detergent with Softener**

The following example shows the performance of the silicone samples when added to polyester T-shirts and nylon/elastane underwear washed with laundry powder detergent (Persil Color) and fabric softener (Comfort). Control 3 represents Polyester T-shirts and Nylon/Elastane underwear washed with Persil Color detergent + Comfort fabric conditioner.

Charge Decay Results of Control 3: Polyester and nylon/elastane washed with Persil Color and Comfort.

| Control 3 | Polyester, 1W | Polyester 3W | Polyester, 5W | Nylon/Elastane |
|---|---|---|---|---|
| Surface (Temp. °C) | 25.93 | 25.98 | 25.92 | 25.8 |
| Surface (% R.H.) | 19.31 | 18.75 | 18.76 | 19.38 |
| 1/e reached after | 17.275 sec | 21.275 sec | 7.6344 sec | 12.431 sec |
| 10% | 60.275 sec | 72.9 sec | 27.337 sec | 52.525 sec |
| Received charge | 8.11011 nC | 7.45864 nC | 7.65014 nC | 11.0175 nC |
| Capacitance loading | 2.23833 | 2.01955 | 2.12808 | 2.56821 |

It appears that the addition of softener helps to increase the rate of charge dissipation as expected since fabric softeners also a function as antistats. This is usually true with hydrophilic fabrics, however here both types of synthetic fabrics are hydrophobic.

The next tables report the behavior of fabrics adding silicone products together with softener.

f) CONTROL 3: Polyester T-shirt and Nylon/Elastane underwear washed with Persil Color+ Comfort

g) Detergent + Comfort + Sample A: Polyester and Nylon/Elastane washed with Persil Color + Comfort + Sample A

h) Detergent + Comfort + Sample B: Polyester and Nylon/Elastane washed with Persil Color + Comfort + Sample B

| Pers.Color+Sample A | Polyester, 1W | Polyester 3W | Polyester, 5W | Nylon/Elastane |
|---|---|---|---|---|
| Surface (Temp. °C) | 23.6 | 24 | 24.4 | 24.4 |
| Surface (% R.H.) | 21.35 | 20.5 | 20.27 | 19.73 |
| 1/e reached after | 3.7125 sec | 4.6031 sec | 1.4273 sec | 3.8531 sec |
| 10% | 12.4 sec | 15.837 sec | 4.3844 sec | 15.712 sec |
| Received charge | 8.86659 nC | nC | 8.35858 nC | 8.56662 nC |
| Capacitance loading | 2.55692 | 2.52078 | 2.4774 | 2.05796 |

| Pers.Color+Sample B | Polyester, 1W | Polyester 3W | Polyester, 5W | Nylon/Elastane |
|---|---|---|---|---|
| Surface (Temp. °C) | 25.2 | 25.46 | 25.27 | 25.47 |
| Surface (% R.H.) | 17.66 | 17.93 | 17.56 | 18.14 |
| 1/e reached after | 7.4938 sec | 1.9781 sec | 1.3687 sec | 7.15 sec |
| 10% | 26.275 sec | 6.525 sec | 4.4625 sec | 31.65 sec |
| Received charge | 8.09164 nC | 8.70131 nC | 10.2224 nC | 6.30221 nC |
| Capacitance loading | 2.29729 | 2.65998 | 3.01763 | 1.60518 |

The tables above report the charge decay measurements in the presence of fabric conditioner. Inclusion of Samples A or B in the wash load causes an increase in the rate of static charge dissipation on polyester compared to the control without silicone additive. This increase in static charge dissipation rate is additive to the effect noted previously with fabric conditioner alone. The data also indicate that there is a build-up effect of static charge dissipation, as the samples washed five times show faster rates of dissipation than those washed only one or three times.

The following example reports the charge decay measurements of wash loads treated with sample C:

i) CONTROL 3: Polyester T-shirt and Nylon/Elastane underwear washed with Persil Color+ Comfort
j) Det.+ Comfort+ Sample C: Polyester and Nylon/Elastane washed with Persil Color + Comfort + Sample C

| Pers.Color+Sample C | Polyester, 1W | Polyester 3W | Polyester, 5W | Nylon/Elastane |
|---|---|---|---|---|
| Surface (Temp. °C) | 25.2 | (25.36 | 25.55 | 25.6 |
| Surface (% R.H.) | 17.09 | 17.38 | 17.34 | 17.53 |
| 1/e reached after | 3.7203 sec | 2.2438 sec | 1.8102 sec | 4.5094 sec |
| 10% | 13.369 sec | 7.9625 sec | 6.0563 sec | 16.587 sec |
| Received charge | 9.03694 nC | 10.2879 nC | 8.37905 nC | 19.02485 nC |
| Capacitance loading | 2.61561 | 3.31071 | 2.43421 | 2.12543 |

The table above reports the charge decay measurements in the presence of fabric conditioner. Inclusion of Sample C in the wash load causes an increase in the rate of static charge dissipation on polyester compared to the control without silicone additive. This increase in static charge dissipation rate is additive to the effect noted previously with fabric conditioner alone. The data also indicate that there is a build-up effect of static charge dissipation, as the samples washed five times show faster rates of dissipation than those washed only one or three times.

## Claims

1. A method of altering the solid surface of a synthetic textile comprising contacting said solid surface of a synthetic

textile with a composition comprising at least one silicone additive during either a wash cycle or a rinse cycle of a laundry cycle to produce a solid synthetic textile having an altered surface, wherein said silicone additive is selected from the group consisting of
a surfactant having the general formula (I):

$$(R^1)(R^2)(R^3)Si\text{-}R^4\text{-}Si(R^5)(R^6)(R^7)$$

where $R^1$, $R^2$, $R^3$, $R^5$, and $R^6$ are each independently selected from the group consisting of 1 to 6 monovalent hydrocarbon radicals, aryl, and a hydrocarbon group of 7 to 10 carbons containing an aryl group;
$R^4$ is a hydrocarbon group of 1 to 3 carbons; and
$R^7$ is an alkyleneoxide group of the general formula $R^8(C_2H_4O)_a(C_3H_6O)_b(C_4H_8O)_cR^9$, where $R^8$ is a divalent linear or branched hydrocarbon radical having the structure $-CH_2-CH(R^{10})(R^{11})_dO-$, where $R^{10}$ is H or methyl; $R^{11}$ is a divalent alkyl radical of 1 to 6 carbons where the subscript d may be 0 or 1; $R^9$ is selected from the group consisting of H, monovalent hydrocarbon radicals of 1 to 6 carbon atoms and acetyl, subject to the limitation that the subscripts a, b and c are zero or positive and satisfy the following relationships: $2 \leq a + b + c \leq 20$ with $a \geq 2$;
a surfactant having the general formula (II):

$$MM',$$

where $M = R^{12}R^{13}R^{14}SiO_{1/2}$ and $M' = R^{15}R^{16}R^{17}SiO_{1/2}$;
with $R^{12}$ selected from the group consisting of branched monovalent hydrocarbon radical of from 3 to 6 carbon atoms and $R^{18}$, where $R^{18}$ is selected from the group consisting of $R^{19}R^{20}R^{21}SiR^{22}$ and $(R^{15}R^{16}R^{17})SiR^{22}(Si(R^{13}R^{14})SiO_{1/2})$ with $R^{19}$, $R^{20}$, and $R^{21}$ each independently selected from the group of monovalent hydrocarbon radicals having from 1 to 6 carbon atoms and monovalent aryl or alkaryl hydrocarbon radicals having from 6 to 13 carbon atoms and $R^{22}$ is a divalent hydrocarbon radical having from 1 to 3 carbon atoms,
$R^{13}$ and $R^{14}$ are each independently selected from the group of from 1 to 6 carbon atom monovalent hydrocarbon radicals or $R^{12}$,
with $R^{15}$ an alkylpolyalkyleneoxide of the general formula:
$R^{23}(C_2H_4O)_e(C_3H_6O)_f(C_4H_8O)_gR^{24}$, where $R^{23}$ is a divalent linear or branched hydrocarbon radical having the structure: $-CH_2-CH(R^{25})(R^{26})_hO-$ where $R^{25}$ is H or methyl; $R^{26}$ is a divalent alkyl radical of 1 to 6 carbons where the subscript h may be 0 or 1; $R^{24}$ is selected from the group consisting of H, monovalent hydrocarbon radicals of from 1 to 6 carbon atoms and acetyl where the subscripts e, f and g are zero or positive and satisfy the following relationships: $2 \leq e + f + g \leq 20$ with $e \geq 2$, and
$R^{16}$ and $R^{17}$ are each independently selected from the group of monovalent hydrocarbon radicals having from 1 to 6 carbon atoms or $R^{15}$;
a surfactant having the general formula (III):

$$M^1D^1M^2$$

wherein $M^1 = (R^{27})(R^{28})(R^{29})SiO_{1/2}$; $M^2 = (R^{30})(R^{31})(R^{32})Si_{1/2}$; and $D^1 = (R^{33})(Z)SiO_{2/2}$
where $R^{27}$, $R^{28}$, $R^{29}$, $R^{30}$, $R^{31}$, $R^{32}$ and $R^{33}$ are each independently selected from the group consisting of 1 to 4 carbon monovalent hydrocarbon radicals, aryl, and a hydrocarbon group of 4 to 9 carbons containing an aryl group; and
Z is an alkyleneoxide group of the general formula: $R^{34}(C_2H_4O)_i(C_3H_6O)_j(C_4H_8O)_kR^{35}$, where $R^{34}$ is a linear or branched divalent hydrocarbon radical of 2, 3, 5, 6, 7, 8, or 9 carbon atoms; $R^{35}$ is selected from the group consisting of H, monovalent hydrocarbon radicals of from 1 to 6 carbon atoms and acetyl, and the subscripts i, j and k are zero or positive and satisfy the following relationships: $2 \leq i + j + k \leq 20$ with $i \geq 2$;
a polyammonium-polysiloxane copolymer surfactant comprising repeating units of the formula (IV):

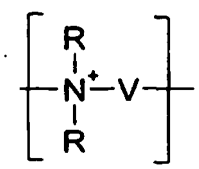

where R represents independent from each other organic groups, which contain moieties selected from quaternary ammonium groups or amineoxide groups,

V is selected from the group $V^1$ or group $V^2$, where
$V^2$ is selected from divalent or trivalent, straight chained, cyclic or branched, saturated, unsaturated or aromatic hydrocarbon moieties with up to 1000 carbon atoms (the carbon atoms of the below defined polysiloxane moiety $Z^2$ are not counted here) optionally containing one or more groups selected from -O-, $-NR^2-$, where $R^2$ is hydrogen, a divalent or trivalent, straight chained, cyclic or branched, saturated, unsaturated or aromatic hydrocarbon moiety with up to 100 carbon atoms, optionally containing one or more groups selected from -O-, -NH-, -C(O)- and -C(S)-, and optionally substituted by one or more substituents, selected from the group consisting of hydroxyl, an optionally substituted, preferentially one or more N atoms containing heterocyclic group, amino, alkylamino, dialkylamino, polyether, polyetherester, under the proviso that if there are more than one $-NR^2-$ groups they can be identical or different, -C(O)-, -C(S)-, optionally, the moiety $V^2$ can be substituted by one or more hydroxyl groups and the moiety $V^2$ contains at least one group $-Z^2-$ of the formula

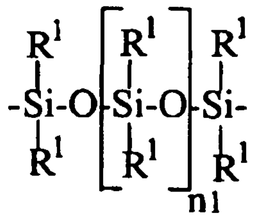

where $R^1$ is identical or different, selected from the group consisting of: $C_1$ to $C_{22}$ alkyl, fluoro($C_1$-$C_{10}$)alkyl and $C_6$-$C_{10}$ aryl, and with $n_1$ = 20 to 1000,
$V^1$ is selected from divalent or trivalent, straight chained, cyclic or branched, saturated, unsaturated or aromatic hydrocarbon moieties with up to 1000 carbon atoms which can be substituted by one or more groups selected from -O-, $-NR^2-$, $-N^+R^2_2-$, where $R^2$ is as defined above and the groups $R^2$ in $V^1$ and $V^2$ can be identical or different, -C (O)-, -C(S)- and $-Z^1-$, where $-Z^1-$ is a moiety of the formula

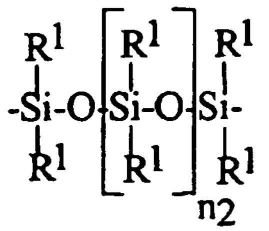

where $R^1$ is as defined above and the groups $R^1$ in $V^1$ and $V^2$ can be identical or different, with $n_2$ = 0 bis 19, and optionally, the moiety $V^1$ can be substituted by one or more hydroxyl groups, where the moieties $V^1$ and $V^2$ in the polyammonium-polysiloxane copolymers can be identical or different, under the proviso that at least one group $Z^1$ or $Z^2$ is present; and
where the positive charges of the ammonium groups are neutralized by organic or inorganic acid anions;
and, mixtures thereof.

**2.** The method of claim 1 wherein said solid synthetic textile is polyester.

**3.** The method of claim 1 wherein said solid synthetic textile is nylon.

**4.** The method of claim 1 wherein said solid synthetic textile is in the form of a finished garment.

**5.** The method of claim 4 wherein said textile contains at least some polyester, nylon, or acrylic fibers, or mixtures thereof and/or mixtures of any of the foregoing with cotton and/or wool.

**6.** The method of claim 1 wherein said composition comprising at least one silicone additive further comprises a laundry detergent or fabric conditioner used for cleaning and/or improving softness of said fabrics.

**7.** The method of claim 1 wherein said altered surface of said solid synthetic textile has a hydrophilic coating that remains hydrophilic after multiple wash and dry cycles of a laundry machine.

8. The method of claim 7 wherein said altered surface of said solid synthetic textile has a hydrophilic coating that remains hydrophilic after 3 or more wash and dry cycles of a laundry machine.

## Patentansprüche

1. Verfahren zum Ändern der festen Oberfläche einer synthetischen Textilie, welches das Kontaktieren der festen Oberfläche einer synthetischen Textilie mit einer Zusammensetzung, die mindestens einen Silikonzusatz umfasst, während entweder eines Waschzyklus oder eines Spülzyklus eines Wäschezyklus umfasst, um eine feste synthetische Textilie mit einer geänderten Oberfläche zu erzeugen, wobei der Silikonzusatz gewählt wird aus der Gruppe bestehend aus
einem oberflächenaktiven Stoff mit der allgemeinen Formel (I):

$$(R^1)(R^2)(R^3)Si\text{-}R^4\text{-}Si(R^5)(R^6)(R^7)$$

wobei $R^1$, $R^2$, $R^3$, $R^5$ und $R^6$ jeweils unabhängig aus der Gruppe bestehend aus 1 bis 6 monovalenten Kohlenwasserstoffradikalen, Aryl und einer Kohlenwasserstoffgruppe mit 7 bis 10 Kohlenstoffen, die eine Arylgruppe enthält, gewählt sind;
$R^4$ eine Kohlenwasserstoffgruppe mit 1 bis 3 Kohlenstoffen ist; und
$R^7$ eine Alkylenoxidgruppe der allgemeinen Formel $R^8(C_2H_4O)_a(C_3H_6O)_b(C_4H_8O)cR^9$ ist, wobei $R^8$ ein bivalentes lineares oder verzweigtes Kohlenwasserstoffradikal mit der Struktur $-CH_2-CH(R^{10})(R^{11})_dO$-ist, wobei $R^{10}$ H oder Methyl ist; $R^{11}$ ein bivalentes Alkylradikal mit 1 bis 6 Kohlenstoffen ist, wobei die Tieferstellung d 0 oder 1 sein kann; $R^9$ aus der Gruppe bestehend aus H, monovalenten Kohlenwasserstoffradikalen mit 1 bis 6 Kohlenstoffatomen und Acetyl gewählt ist, unter der Einschränkung, dass die Tieferstellungen a, b und c null oder positiv sind und die folgenden Beziehungen erfüllen: $2 \leq a + b + c \leq 20$, wobei $a \geq 2$;
einem oberflächenaktiven Stoff mit der allgemeinen Formel (II):

$$MM',$$

wobei $M = R^{12}R^{13}R^{14}SiO_{1/2}$ und $M' = R^{15}R^{16}R^{17}SiO_{1/2}$;
wobei $R^{12}$ aus der Gruppe bestehend aus verzweigtem monovalenten Kohlenwasserstoffradikal mit 3 bis 6 Kohlenstoffatomen und $R^{18}$ gewählt ist, wobei $R^{18}$ aus der Gruppe bestehend aus $R^{19}R^{20}R^{21}SiR^{22}$ und $(R^{15}R^{16}R^{17})SiR^{22}(Si(R^{13}R^{14})SiO_{1/2})$ gewählt ist, wobei $R^{19}$, $R^{20}$ und $R^{21}$ jeweils unabhängig aus der Gruppe von monovalenten Kohlenwasserstoffradikalen mit 1 bis 6 Kohlenstoffen und monovalenten Aryl- oder Alkaryl-Kohlenwasserstoffradikalen mit 6 bis 13 Kohlenstoffatomen gewählt sind und $R^{22}$ ein bivalentes Kohlenwasserstoffradikal mit 1 bis 3 Kohlenstoffatomen ist,
$R^{13}$ und $R^{14}$ jeweils unabhängig aus der Gruppe von monovalenten Kohlenwasserstoffradikalen mit 1 bis 6 Kohlenstoffen oder $R^{12}$ gewählt sind,
wobei $R^{15}$ ein Alkylpolyalkylenoxid der allgemeinen Formel:
$R^{23}(C_2H_4O)_e(C_3H_6O)_f(C_4H_8O)_gR^{24}$ ist, wobei $R^{23}$ ein bivalentes lineares oder verzweigtes Kohlenwasserstoffradikal mit der Struktur: $-CH2-CH(R^{25})(R^{26})_hO$-ist, wobei $R^{25}$ H oder Methyl ist; $R^{26}$ ein bivalentes Alkylradikal mit 1 bis 6 Kohlenstoffen ist, wobei die Tieferstellung h 0 oder 1 sein kann; $R^{24}$ aus der Gruppe bestehend aus H, monovalenten Kohlenwasserstoffradikalen mit 1 bis 6 Kohlenstoffatomen und Acetyl gewählt ist, wobei die Tieferstellungen e, f und g null oder positiv sind und die folgenden Beziehungen erfüllen: $2 \leq e + f + g \leq 20$, wobei $e \geq 2$, und
$R^{16}$ und $R^{17}$ jeweils unabhängig aus der Gruppe von monovalenten Kohlenwasserstoffradikalen mit 1 bis 6 Kohlenstoffatomen oder $R^{15}$ gewählt sind;
einem oberflächenaktiven Stoff mit der allgemeinen Formel (III):

$$M^1D^1M^2$$

wobei $M^1 = (R^{27})(R^{28})(R^{29})SiO_{1/2}$; $M^2 = (R^{30})(R^{31})(R^{32})Si_{1/2}$; und $D^1 = (R^{33})(Z)SiO_{2/2}$
wobei $R^{27}$, $R^{28}$, $R^{29}$, $R^{30}$, $R^{31}$, $R^{32}$ und $R^{33}$ jeweils unabhängig aus der Gruppe bestehend aus monovalenten Kohlenwasserstoffradikalen mit 1 bis 4 Kohlenstoffen, Aryl und einer Kohlenwasserstoffgruppe mit 4 bis 9 Kohlenstoffen, die eine Arylgruppe enthält, gewählt sind; und
Z eine Alkylenoxidgruppe der allgemeinen Formel:
$R^{14}(C_2H_4O)_i(C_3H_6O)_j(C_4H_8O)_kR^{35}$ ist, wobei $R^{34}$ ein lineares oder verzweigtes bivalentes Kohlenwasserstoffradikal mit 2, 3, 5, 6, 7, 8 oder 9 Kohlenstoffatomen ist; $R^{35}$ aus der Gruppe bestehend aus H, monovalenten Kohlenwasserstoffradikalen mit 1 bis 6 Kohlenstoffatomen und Acetyl gewählt ist, und die Tieferstellungen i, j und k null oder

positiv sind und die folgenden Beziehungen erfüllen: $2 \leq i + j + k \leq 20$, wobei $i \geq 2$;
eine oberflächenaktiven Polyammonium-Polysiloxan-Copolymer-Stoff, der Grundbausteine der Formel (IV):

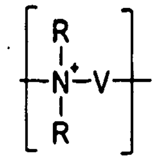

umfasst, wobei R unabhängig voneinander organische Gruppen darstellt, die Komponenten gewählt aus quaternären Ammoniumgruppen oder Aminoxidgruppen enthalten,
V aus der Gruppe $V^1$ oder der Gruppe $V^2$ gewählt ist, wobei
$V^2$ aus bivalenten oder trivalenten, geradkettigen, zyklischen oder verzweigten, gesättigten, ungesättigten oder aromatischen Kohlenwasserstoffkomponenten mit bis zu 1000 Kohlenstoffatomen (die Kohlenstoffatome der nachstehend definierten Polysiloxankomponente $Z^2$ werden hier nicht gezählt) gewählt ist, wobei es optional ein oder mehrere Gruppen gewählt aus -O-, $-NR^2-$ enthält, wobei $R^2$ ein Wasserstoff, eine bivalente oder trivalente, geradkettige, zyklische oder verzweigte, gesättigte, ungesättigte oder aromatische Kohlenwasserstoffkomponente mit bis zu 100 Kohlenstoffatomen ist, die optional ein oder mehrere Gruppen gewählt aus -O-, -NH-, -C(O)- und -C(S)-enthält und optional durch einen oder mehrere Substituenten, gewählt aus der Gruppe bestehend aus Hydroxyl, einer optional substituierten, vorzugsweise ein oder mehrere N-Atome enthaltenden heterozyklischen Gruppe, Amino, Alkylamino, Dialkylamino, Polyether, Polyetherester substituiert ist, unter dem Vorbehalt, dass bei Vorliegen von mehr als einer $-NR^2-$ Gruppe, diese identisch oder unterschiedlich sein können, -C(O)-, -C(S)-, optional die Komponente $V^2$ durch eine oder mehrere Hydroxylgruppen substituiert sein können und die Komponente $V^2$ mindestens eine Gruppe $-Z^2-$ der Formel

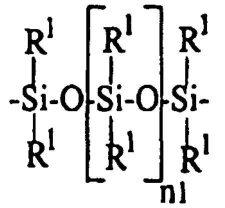

enthält, wobei $R^1$ identisch oder unterschiedlich ist, wobei es gewählt ist aus der Gruppe bestehend aus: $C_1$ bis $C_{22}$ Alkyl, Fluor($C_1$-$C_{10}$)alkyl und $C_6$-$C_{10}$-Aryl, und wobei $n_1$ = 20 bis 1000,
$V^1$ aus bivalenten oder trivalenten, geradkettigen, zyklischen oder verzweigten, gesättigten, ungesättigten oder aromatischen Kohlenwasserstoffkomponenten mit bis zu 1000 Kohlenstoffen gewählt ist, die durch eine oder mehrere Gruppen gewählt aus -O-, $-NR^2-$, $-N^+R^2{}_2-$ substituiert werden können, wobei $R^2$ wie vorstehend definiert ist und die Gruppen $R^2$ in $V^1$ und $V^2$ identisch oder unterschiedlich sein können, -C(O)-, -C(S)- und $-Z^1-$, wobei $-Z^1-$ eine Komponente der Formel

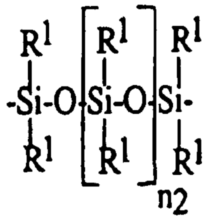

ist, wobei $R^1$ wie vorstehend definiert ist und die Gruppen $R^1$ in $V^1$ und $V^2$ identisch oder unterschiedlich sein können, wobei $n_2$ = 0 bis 19, und optional die Komponente $V^1$ durch eine oder mehrere Hydroxylgruppen substituiert sein kann, wobei die Komponenten $V^1$ und $V^2$ in den Polyammonium-Polysiloxan-Copolymeren identisch oder unterschiedlich sein können, unter dem Vorbehalt, dass mindestens eine Gruppe $Z^1$ oder $Z^2$ vorhanden ist; und
wobei die positiven Änderungen der Ammoniumgruppen durch organische oder anorganische Säureanionen neutralisiert werden;

und Mischungen derselben.

2. Verfahren nach Anspruch 1, **dadurch gekennzeichnet, dass** die feste synthetische Textilie Polyester ist.

3. Verfahren nach Anspruch 1, **dadurch gekennzeichnet, dass** die feste synthetische Textilie Nylon ist.

4. Verfahren nach Anspruch 1, **dadurch gekennzeichnet, dass** die feste synthetische Textilie die Form eines fertigen Kleidungsstücks hat.

5. Verfahren nach Anspruch 4, **dadurch gekennzeichnet, dass** die Textilie mindestens einige Polyester-, Nylon- oder Acrylfasern oder Mischungen derselben und/oder Mischungen beliebiger der vorstehenden mit Baumwolle und/oder Wolle enthält.

6. Verfahren nach Anspruch 1, **dadurch gekennzeichnet, dass** die mindestens einen Silikonzusatz umfassende Zusammensetzung weiterhin ein Waschmittel oder einen Weichspüler umfasst, das/der zum Reinigen und/oder Verbessern der Weichheit der Gewebe verwendet wird.

7. Verfahren nach Anspruch 1, **dadurch gekennzeichnet, dass** die geänderte Oberfläche der festen synthetischen Textilie eine hydrophile Beschichtung aufweist, die nach mehreren Wasch- und Trocknungszyklen einer Waschmaschine hydrophil bleibt.

8. Verfahren nach Anspruch 7, **dadurch gekennzeichnet, dass** die geänderte Oberfläche der festen synthetischen Textilie eine hydrophile Beschichtung aufweist, die nach 3 oder mehr Wasch- und Trocknungszyklen einer Waschmaschine hydrophil bleibt.

## Revendications

1. Procédé de modification de la surface solide d'un textile synthétique, comprenant la mise en contact de ladite surface solide d'un textile synthétique avec une composition comprenant au moins un additif de silicone soit durant un cycle de lavage soit durant un cycle de rinçage d'un cycle de lessive pour produire un textile synthétique solide présentant une surface modifiée, où ledit additif de silicone est sélectionné dans le groupe consistant en
un agent tensioactif ayant la formule générale (I):

$$(R^1)\ (R^2)\ (R^3)\ Si\text{-}R^4\text{-}Si(R^5)\ (R^6)\ (R^7)$$

où $R^1$, $R^2$, $R^3$, $R^5$ et $R^6$ sont chacun indépendamment sélectionnés dans le groupe consistant en 1 à 6 radicaux d'hydrocarbures monovalents, aryle, et un groupe hydrocarbure de 7 à 10 carbones contenant un groupe aryle; $R^4$ est un groupe hydrocarbure de 1 à 3 carbones; et $R^7$ est un groupe alkylèneoxyde de la formule générale $R^8(C_2H_4O)_a(C_3H_6O)_b(C_4H_8O)_cR^9$, où $R^8$ est un radical d'hydrocarbure linéaire ou ramifié divalent ayant la structure $-CH_2-CH(R^{10})(R^{11})_dO-$, où $R^{10}$ est H ou méthyle; $R^{11}$ est un radical d'alkyle divalent de 1 à 6 carbones, où l'indice d peut être 0 ou 1; $R^9$ est sélectionné dans le groupe consistant en H, radicaux d'hydrocarbure monovalents de 1 à 6 atomes de carbone et acétyle, à condition que les indices, a, b et c soient zéro ou positifs et satisfont aux relations suivantes: $2 \leq a + b + c \leq 20$ avec $a \geq 2$;
un agent tensioactif ayant la formule générale (II):

$$MM'$$

où $M = R^{12}R^{13}R^{14}SiO_{1/2}$ et $M'=R^{15}R^{16}R^{17}SiO_{1/2}$;
$R^{12}$ étant sélectionné dans le groupe consistant en un radical d'hydrocarbure monovalent ramifié de 3 à 6 atomes de carbone et $R^{18}$, où $R^{18}$ est sélectionné dans le groupe consistant en $R^{19}R^{20}R^{21}SiR^{22}$ et $(R^{15}R^{16}R^{17})\ SiR^{22}(Si(R^{13}R^{14})\ SiO_{1/2})$ avec $R^{19}$, $R^{21}$, et $R^{21}$ chacun indépendamment sélectionné dans le groupe de radicaux d'hydrocarbure monovalents ayant de 1 à 6 atomes de carbone et radicaux d'hydrocarbures d'aryle ou d'alkaryle monovalents ayant de 6 à 13 atomes de carbone, et $R^{22}$ est un radical d'hydrocarbure divalent ayant de 1 à 3 atomes de carbone,
$R^{13}$ et $R^{14}$ sont chacun indépendamment sélectionnés dans le groupe de radicaux d'hydrocarbure monovalents de 1 à 6 atomes de carbone ou $R^{12}$,
$R^{15}$ étant un alkylpolyalkylèneoxyde de la formule générale:

$R^{23}(C_2H_4O)_e(C_3H_6O)_r(C_4H_8O)_gR^{24}$, où $R^{23}$ est un radical d'hydrocarbure linéaire ou ramifié divalent ayant la structure: $-CH_2-CH(R^{25})(R^{26})_hO-$ où $R^{25}$ est H ou méthyle; $R^{26}$ est un radical d'alkyle divalent de 1 à 6 atomes de carbone, où l'indice h peut être 0 ou 1; $R^{24}$ est sélectionné dans le groupe consistant en H, radicaux d'hydrocarbure monovalents de 1 à 6 atomes de carbone et acétyle, où les indices e, f et g sont zéro ou positifs et satisfont aux relations suivantes:

$2 \leq e + f + g \leq 20$ avec $e \geq 2$, et

$R^{16}$ et $R^{17}$ sont chacun indépendamment sélectionnés dans le groupe de radicaux d'hydrocarbures monovalents ayant de 1 à 6 atomes de carbone ou $R^{15}$;

un agent tensioactif ayant la formule générale (III):

$$M^1D^1M^2$$

où $M^1 = (R^{27})(R^{28})(R^{29})SiO_{1/2}$; $M^2 = (R^{30})(R^{31})(R^{32})Si_{1/2}$; et $D^1 = (R^{33})(Z)SiO_{2/2}$

où $R^{27}$, $R^{28}$, $R^{29}$, $R^{30}$, $R^{31}$, $R^{32}$ et $R^{33}$ sont chacun indépendamment sélectionnés dans le groupe consistant en radicaux d'hydrocarbure monovalents de 1 à 4 atomes de carbone, aryle, et un groupe hydrocarbure de 4 à 9 atomes de carbone contenant un groupe aryle; et

Z est un groupe alkylèneoxyde de la formule générale: $R^{34}(C_2H_4O)_i(C_3H_6O)_j(C_4H_8O)_kR^{35}$, où $R^{34}$ est un radical d'hydrocarbure divalent linéaire ou ramifié de 2, 3, 5, 6, 7, 8 ou 9 atomes de carbone; $R^{35}$ est sélectionné dans le groupe consistant en H, radicaux d'hydrocarbure monovalents de 1 à 6 atomes de carbone et acétyle, et les indices i, j et k sont zéro ou positifs et satisfont aux relations suivantes: $2 \leq i + j + k \leq 20$ avec $i \geq 2$;

un agent tensioactif de copolymère de polyammonium-polysiloxane comprenant des unités de répétition de la formule (IV):

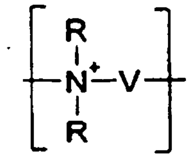

où R représente indépendamment l'un de l'autre des groupes organiques qui contiennent des fragments sélectionnés dans des groupes d'ammonium quaternaire ou des groupes amineoxyde,

V est sélectionné dans le groupe $V^1$ ou groupe $V^2$, où

$V^2$ est sélectionné parmi des fragments d'hydrocarbure divalents ou trivalents, à chaîne droite, cyclique ou ramifiée, saturé, insaturé ou aromatique avec jusqu'à 1000 atomes de carbone (les atomes de carbone du fragment de polysiloxane définis ci-dessous $Z^2$ n'étant pas comptés ici) contenant en option un ou plusieurs groupes sélectionnés parmi -O-, $-NR^2-$, où $R^2$ est hydrogène, un fragment d'hydrocarbure divalent ou trivalent, à chaîne droite, cyclique ou ramifiée, saturé, insaturé ou aromatique avec jusqu'à 100 atomes de carbone, contenant en option un ou plusieurs groupes sélectionnés parmi -O-, -NH-, -C(O)- et -C(S)-, et optionnellement substitué par un ou plusieurs substituants, sélectionnés dans le groupe consistant en hydroxyle, un groupe hétérocyclique optionnellement substitué, contenant de préférence un ou plusieurs atomes N, amino, alkylamino, dialkylamino, polyéther, polyétherester, à condition que s'il y a plus qu'un groupe- $NR^2$-, ils peuvent être identiques ou différents, -C(O)-, -C(S)-, en option, le fragment $V^2$ peut être substitué par un ou plusieurs groupes hydroxyles, et le fragment $V^2$ contient au moins un groupe $-Z^2-$ de la formule

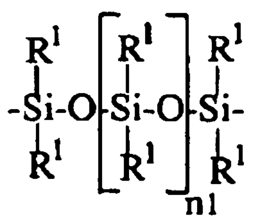

où $R^1$ est identique ou différent, sélectionné dans le groupe consistant en: alkyle$C_1$-$C_{22}$, fluoroalkyle($C_1$-$C_{10}$) et aryle$C_6$-$C_{10}$, et avec $n_1$ = 20 à 1000,

$V^1$ est sélectionné parmi des fragments d'hydrocarbure divalents ou trivalents, à chaîne droite, cyclique ou ramifiée, saturé, insaturé ou aromatique avec jusqu'à 1000 atomes de carbone qui peuvent être substitués par un ou plusieurs

groupes sélectionnés parmi -O-, $-NR^2-$, $-N+R^2_2-$, où $R^2$ est comme défini ci-dessus, et les groupes $R^2$ dans $V^1$ et $V^2$ peuvent être identiques ou différents, -C(O)-, -C(S)- et $-Z^1-$, où $-Z^1-$ est un fragment de la formule

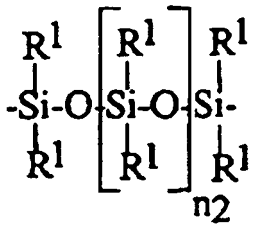

où $R^1$ est comme défini ci-dessus, et les groupes $R^1$ dans $V^1$ et $V^2$ peuvent être identiques ou différents, avec $n_2$ = 0 à 19, et, en option, le fragment $V^1$ peut être substitué par un ou plusieurs groupes hydroxyle, où les fragments $V^1$ et $V^2$ dans les copolymères de polyammonium-polysiloxane peuvent être identiques ou différents, à condition qu'au moins un groupe $Z^1$ ou $Z^2$ soit présent; et
où les charges positives des groupes d'ammonium sont neutralisées par des anions d'acide organique ou inorganique;
et leurs mélanges.

**2.** Procédé selon la revendication 1, dans lequel ledit textile synthétique solide est le polyester.

**3.** Procédé selon la revendication 1, dans lequel ledit textile synthétique solide est le nylon.

**4.** Procédé selon la revendication 1, dans lequel ledit textile synthétique solide se présente sous la forme d'un vêtement fini.

**5.** Procédé selon la revendication 4, dans lequel ledit textile contient au moins un polyester, nylon ou des fibres acryliques ou des mélanges de ceux-ci et/ou des mélanges de l'un quelconque qui précède avec du coton et/ou de la laine.

**6.** Procédé selon la revendication 1, dans lequel ladite composition comprenant au moins un additif de silicone comprend en outre un détergent à lessive ou conditionneur de tissu utilisé pour nettoyer et/ou améliorer la douceur desdits tissus.

**7.** Procédé selon la revendication 1, dans lequel ladite surface modifiée dudit textile synthétique solide présente un revêtement hydrophile qui reste hydrophile après de multiples cycles de lavage et de séchage d'une machine à laver.

**8.** Procédé selon la revendication 7, dans lequel ladite surface modifiée dudit textile synthétique solide présente un revêtement hydrophile qui reste hydrophile après 3 ou plusieurs cycles de lavage et de séchage d'une machine à laver.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 99521307 P
- US 4533477 A
- DE 102005036602 A1
- US 20070131611 A1
- US 11379592 B
- US 20070088091 A
- US 20070184005 A